# EUROPEAN PATENT APPLICATION

(11) **EP 2 719 441 A1**
(43) Date of publication of application: **16.04.2014**
(21) Application number: 12782974.5
(22) Date of filing: 10.05.2012
(51) Int. Cl.: B01D 53/62, B01D 53/14, B01D 53/58, C01B 31/20, C02F 1/20

(54) **CO2 RECOVERY DEVICE, AND CO2 RECOVERY METHOD.**

(30) Priority: 12.05.2011 JP 2011107695
(71) Applicant: Mitsubishi Heavy Industries, Ltd., Tokyo 108-8215 (JP); The Kansai Electric Power Co., Inc., Kita-ku Osaka-shi Osaka 530-8270 (JP)
(72) Inventor: TANAKA, Hiroshi, Tokyo 108-8215 (JP); NAGAYASU, Hiromitsu, Tokyo 108-8215 (JP); HIRATA, Takuya, Tokyo 108-8215 (JP); TSUJIUCHI, Tatsuya, Tokyo 108-8215 (JP); OISHI, Tsuyoshi, Tokyo 108-8215 (JP); KAMIJO, Takashi, Tokyo 108-8215 (JP); TATSUMI, Masahiko, Hyogo 661-0974 (JP); YAGI, Yasuyuki, Hyogo 661-0974 (JP); KAIBARA, Kazuhiko, Hyogo 661-0974 (JP)
(74) Representative: Bongiovanni, Simone
(86) International application number: PCT/JP2012/062035
(87) International publication number: WO 2012/153812

(57) **Abstract**

A CO₂ recovery device includes: a CO₂ absorption unit (13A) for absorbing CO₂, which is contained in a CO₂-containing flue gas (11A), by a CO₂ absorbent (12); a washing unit (13B) for cooling a CO₂-removed flue gas (11B) and recovering the accompanying CO₂ absorbent (12); a circulation line (L₁) for directly circulating wash water (20) from the top portion of the washing unit (13B); an extraction line (L₂) for extracting a part of the wash water (20) containing the CO₂ absorbent (12) as an extracted fluid (21); a first gas-liquid separation unit (22A) for separating a gas component (24) from the extracted fluid (21); a concentration unit (22B) for concentrating the CO₂ absorbent (12) contained in the extracted fluid (21) and separating the gas component (24); a concentrated fluid return line (L₃) through which a concentrated fluid (23), which is the concentrated CO₂ absorbent (12), returns to the CO₂ absorption unit (13A) provided below the washing unit (13B); and a gas inlet line (L₄) through which the separated gas component (24) is introduced into an absorber (13).

## Description

### Field

The present invention relates to a CO₂ recovery device and a CO₂ recovery method reducing the concentrations of basic amine compounds that remain in a decarbonated flue gas from which CO₂ has been removed by the contact between an absorbent and the gas and are to be released.

### Background

A greenhouse effect caused by CO₂ is pointed out as one of causes of a global warming phenomenon. Accordingly, measures to protect the environment of the earth have been urgently and internationally needed. Since a source of CO₂ corresponds to the whole field of human activity using the combustion of fossil fuel, a demand for the suppression of CO₂ emission tends to become stronger. Accordingly, a method of removing and recovering CO₂, which is contained in a flue gas, by bringing a flue gas of a boiler into contact with an amine-based absorbent such as the aqueous solution of an amine compound has been energetically studied for power generation facilities such as thermoelectric power plants using a large amount of fossil fuel.

When CO₂ is recovered from a flue gas by such an absorbent, an amine compound is accompanied by a decarbonated flue gas from which CO₂ has been recovered. Further, it is necessary to reduce the release amount of the amine compound, which is released together with the decarbonated flue gas, in order to prevent an amine compound from polluting the atmosphere.

In the past, Patent Literature 1 has disclosed a device provided with a washing unit that includes a plurality of stages and recovers an amine compound, which is accompanied by a decarbonated flue gas, by bringing wash water into gas-liquid contact with the decarbonated flue gas from which CO₂ has been absorbed and removed by the gas-liquid contact with an absorbent. The device sequentially recovers amine, which is accompanied by the decarbonated flue gas, by the plurality of stages of the washing unit. Condensed water, from which moisture contained in CO₂ has been condensed and separated in a process for regenerating an amine-based absorbent by removing CO₂ from the amine-based absorbent that has absorbed CO₂, is used as the wash water of Patent Literature 1.

Further, in the past, Patent Literature 2 has disclosed a device that includes a cooling unit that cools a decarbonated flue gas from which CO₂ has been absorbed and removed by the gas-liquid contact with an absorbent, and a contact unit that brings condensed water, which has been condensed by the cooling unit, into countercurrent contact with the decarbonated flue gas. Furthermore, Patent Literature 2 has disclosed a device includes a washing unit that recovers an amine compound, which is accompanied by a decarbonated flue gas, by bringing wash water into gas-liquid contact with the decarbonated flue gas from which CO₂ has been absorbed and removed by the gas-liquid contact with an absorbent. Condensed water, which is condensed by a cooler that cools a flue gas from which CO₂ is not yet recovered, is used as the wash water.

### Citation List

### Patent Literature

Patent Literature 1: Japanese Laid-open Patent Publication No. 2002-126439
Patent Literature 2: Japanese Laid-open Patent Publication No. 8-80421

### Summary

### Technical Problem

However, in recent years, the further reduction of the concentration of an absorbent component, which remains in a decarbonated flue gas and is to be released, has been desired from the viewpoint of environmental conservation. In particular, when a CO₂ recovery device is installed for a flue gas of a thermoelectric power plant or the like of which the amount of a processed gas to be expected in the future is large, the release amount of the absorbent component, which remains in the decarbonated flue gas and is to be released, tends to increase since the release amount of a flue gas is large. For this reason, it is necessary to further reduce the concentration of an absorbent component to be released.

The invention has been made to solve the above-mentioned problem, and an object of the invention is to provide a CO₂ recovery device and a CO₂ recovery method capable of further reducing the concentrations of basic amine compounds that remain in a decarbonated flue gas and are to be released.

### Solution to Problem

According to a first aspect of the present invention in order to solve the problems, there is provided a CO₂ recovery device including: a CO₂ absorber for bringing a CO₂-containing flue gas, which contains CO₂, into contact with a CO₂ absorbent, so as to remove CO₂ and an absorbent regenerator for separating CO₂ from the CO₂ absorbent having absorbed CO₂, so as to regenerate the CO₂ absorbent, the CO₂ recovery device reusing a lean solution, from which CO₂ has been removed in the absorbent regenerator, in the CO₂ absorber, wherein the CO₂ absorber includes: a CO₂ absorption unit for absorbing CO₂, which is contained in the CO₂-containing flue gas, by the CO₂ absorbent; a washing unit provided downstream of the CO₂ absorption unit on a gas flow, for cooling a CO₂-removed flue gas by wash water and recovering the accompanying CO₂ absorbent; a circulation line for supplying the wash water containing the CO₂ absorbent, which is recovered by the washing unit, from a top portion of the washing unit, and for circulating and washing the wash water; an extraction line for extracting a part of the wash water, which contains the CO₂ absorbent, as an extracted fluid from the circulation line; a first gas-liquid separation unit for separating a gas component from the extracted fluid; and a concentration unit for concentrating the CO₂ absorbent contained in the extracted fluid and separating a gas component.

According to a second aspect of the present invention, there is provided the CO₂ recovery device according to the first aspect, further including: an alkali supply unit that adjusts a pH of the extracted fluid by adding an alkali to the first gas-liquid separation unit; an acid washer for recovering a volatile basic component from the gas component, which is separated by the concentration unit, by an acid; and a sub-regeneration unit for regenerating the CO₂ absorbent from the concentrated fluid concentrated by the concentration unit.

According to a third aspect of the present invention, there is provided the CO₂ recovery device according to the first or second aspect, wherein the washing unit includes a plurality of stages.

According to a fourth aspect of the present invention, there is provided the CO₂ recovery device according to the first or second aspect, wherein the washing unit includes a plurality of stages, the wash water is circulated in each stage, and an acid is added to the wash water circulated in the uppermost stage of the washing unit.

According to a fifth aspect of the present invention, there is provided the CO₂ recovery device according to any one of the first to fourth aspects, wherein the concentration of the concentration unit is performed by air or steam.

According to a sixth aspect of the present invention, there is provided CO₂ recovery method by using a CO₂ absorber for bringing a CO₂-containing flue gas, which contains CO₂, into contact with a CO₂ absorbent so as to remove CO₂ and an absorbent regenerator for separating CO₂ from the CO₂ absorbent having absorbed CO₂ so as to regenerate the CO₂ absorbent, CO₂ of the lean solution having been removed in an absorbent regenerator, in a CO₂ absorber and by resusing a lean solution in a CO₂ absorber, CO2 of the lean solution having being removed in the absorbent regenerator, the CO₂ recovery method including: cooling a CO₂-removed flue gas by wash water downstream the CO₂ absorber and extracting a part of a washing unit, which recovers the accompanying CO₂ absorbent, as an extracted fluid; and separating a gas component by separating the gas component from the extracted fluid and then concentrating the CO₂ absorbent contained in the extracted fluid.

According to a seventh aspect of the present invention, there is provided the CO₂ recovery method according to the sixth aspect, wherein an alkali is added to adjust a pH of the extracted fluid when the gas component is separated from the extracted fluid, and a volatile basic component contained in the gas component is recovered by an acid, and the CO₂ absorbent is regenerated from the concentrated fluid.

According to an eighth aspect of the present invention, there is provided the the CO₂ recovery method according to the sixth or seventh aspect, wherein concentration is performed by air or steam.

### Advantageous Effects of Invention

According to the invention, it is possible to further reduce the concentrations of basic amine compounds of an absorbent that remain in a decarbonated flue gas and are to be released, and to reuse a recovered absorbent after concentrating the recovered absorbent.

### Brief Description of Drawings

FIG. 1 is a schematic diagram of a CO₂ recovery device according to a first embodiment.
FIG. 2 is an enlarged view of a component portion including an absorber and a concentration unit of FIG. 1.
FIG. 3 is a schematic diagram of a CO₂ recovery device according to a second embodiment.
FIG. 4 is an enlarged view of a component portion including an absorber and a concentration unit of FIG. 3.
FIG. 5 is a schematic diagram of another CO₂ recovery device according to the second embodiment.
FIG. 6 is a schematic diagram of a CO₂ recovery device according to a third embodiment.
FIG. 7 is an enlarged view of a component portion including an absorber and a concentration unit of FIG. 6.
FIG. 8 is a schematic diagram of a CO₂ recovery device according to a fourth embodiment.

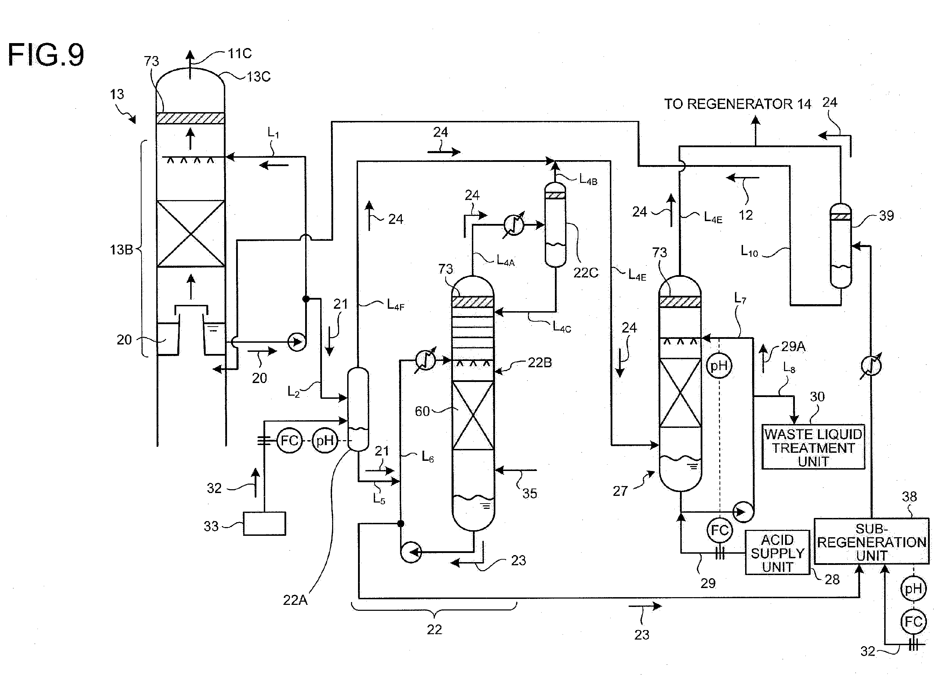

FIG. 9 is an enlarged view of a component portion including an absorber and a concentration unit of FIG. 8.
FIG. 10 is a diagram illustrating a relation between a pH and the residual ratio of each component contained in an extracted fluid.
FIG. 11 is a diagram illustrating a relation between a pH and the recovery ratio of each volatile basic component contained in an acid treatment fluid.

### Description of Embodiments

The invention will be described in detail below with reference to the drawings. Meanwhile, the invention is not limited by this embodiment. Further, when the invention includes a plurality of embodiments, the invention also includes the combination of the respective embodiments. Further, elements of the following embodiments include elements that can be easily supposed by those skilled in the art, or substantially the same elements as the elements.

### First embodiment

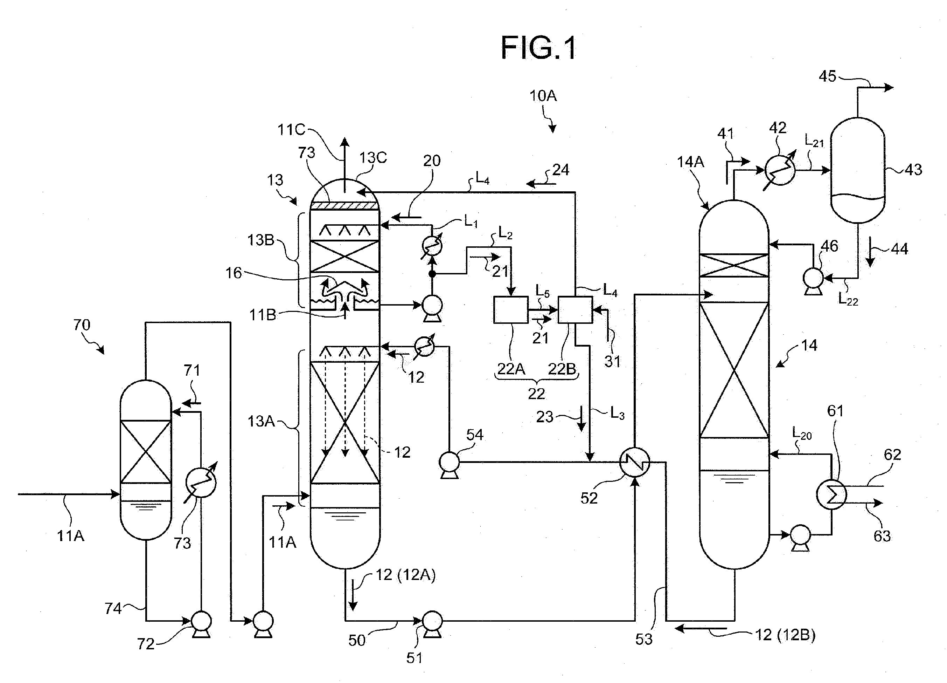

A CO₂ recovery device according to an embodiment of the invention will be described with reference to the drawings. FIG. 1 is a schematic diagram of a CO₂ recovery device according to a first embodiment.

As illustrated in FIG. 1, a CO₂ recovery device 10A according to this embodiment includes: a CO₂ absorber (hereinafter, referred to as an "absorber") 13 that removes CO₂ by bringing a CO₂-containing flue gas 11A, which contains CO₂, into contact with a CO₂ absorbent (lean solution 12B); and an absorbent regenerator 14 that regenerates a CO₂ absorbent having absorbed CO₂ (rich solution 12A). The CO₂ recovery device reuses the lean solution 12B, from which CO₂ has been removed in the absorbent regenerator (hereinafter, referred to as a "regenerator") 14, in the CO₂ absorber 13. The CO₂ absorber 13 includes: a CO₂ absorption unit 13A that absorbs CO₂, which is contained in the CO₂-containing flue gas 11A, by a CO₂ absorbent 12 (lean solution 12B); a washing unit 13B that is provided above the CO₂ absorption unit 13A (on the downstream side of gas flow), cools a CO₂-removed flue gas 11B, and recovers the accompanying CO₂ absorbent 12; a circulation line L₁ that directly circulates wash water 20 containing the CO₂ absorbent 12, which is recovered by the washing unit 13B, from the top portion of the washing unit 13B; an extraction line L₂ that extracts a part of the wash water 20, which contains the CO₂ absorbent 12, as an extracted fluid 21 from the circulation line L₁; a first gas-liquid separation unit 22A that separates a gas component 24 from the extracted fluid 21; a concentrator 22B that concentrates the CO₂ absorbent 12 contained in the extracted fluid 21 and separates the gas component 24; a concentrated fluid return line L₃ through which a concentrated fluid 23, which is the concentrated CO₂ absorbent 12, returns to the CO₂ absorption unit 13A provided below the washing unit 13B; and a gas inlet line L₄ through which the separated gas component 24 is introduced into the absorber 13.

In the absorber 13, the CO₂-containing flue gas 11A comes into countercurrent contact with the CO₂ absorbent 12, which uses, for example, alkanolamine as a base, in the CO₂ absorption unit 13A provided at the lower portion of the CO₂ absorber 13, and CO₂ contained in the CO₂-containing flue gas 11A is absorbed in the CO₂ absorbent 12 by a chemical reaction (R-NH₂ + H₂O + CO₂ → R-NH₃HCO₃).

Further, the CO₂-removed flue gas 11B from which CO₂ has been removed rises toward the washing unit 13B through a chimney tray 16, comes into gas-liquid contact with the wash water 20 that is supplied from the top portion of the washing unit 13B, and recovers the CO₂ absorbent 12 accompanied by the CO₂-removed flue gas 11B. After that, a CO₂ absorbent-removed flue gas 11C from which the CO₂ absorbent 12 has been removed is discharged to the outside from a top portion 13C of the CO₂ absorber 13. Meanwhile, reference numeral 73 denotes a mist eliminator that catches mist contained in a gas.

The pressure of the rich solution 12A, which has absorbed CO₂, is increased by a rich solvent pump 51 provided on a rich solution supply line 50, and the rich solution 12A is heated at a rich/lean solution heat exchanger 52 by the lean solution 12B, which is regenerated in the absorbent regenerator 14, and is supplied toward the top portion of the absorbent regenerator 14.

The rich solution 12A, which is released into the regenerator 14 from the top portion of the regenerator 14, releases most of CO₂ by being heated by steam that is supplied from the bottom portion of the regenerator 14. The CO₂ absorbent 12, which has released a part or most of CO₂ in the regenerator 14, is referred to as a "semi-lean solution". A semi-lean solution (not illustrated) becomes the lean solution 12B from which almost all CO₂ has been removed, by the time the semi-lean solution flows on the bottom portion of the regenerator 14. The lean solution 12B is heated at a regenerating heater 61, which is provided on a circulation line L₂₀, by saturated steam 62. The saturated steam 62, which has been heated, becomes steam condensed water 63.

Meanwhile, a CO₂ gas 41 accompanying steam, which is dispersed from the rich solution 12A and the semi-lean solution (not illustrated) in the regenerator 14, is released from a top portion 14A of the regenerator 14.

Further, the CO₂ gas 41 accompanying steam is led through a gas discharge line L₂₁, the steam is condensed by a condenser 42 provided on the gas discharge line L₂₁, condensed water 44 is separated in a separation drum 43, a CO₂ gas 45 is released to the outside of the system, and after treatment, such as separate compressing or recovering, is performed.

The condensed water 44, which is separated in the separation drum 43, is supplied to the upper portion of the absorbent regenerator 14 by a condensed water circulating pump 46 that is provided on a condensed water line L₂₂.

Meanwhile, although not illustrated, a part of the condensed water 44 is supplied to the top portion 13C of the washing unit 13B as wash water 20 for the CO₂ absorbent and is used for the absorption of the CO₂ absorbent 12 accompanied by the CO₂-removed flue gas 11B.

The regenerated CO₂ absorbent (lean solution 12B) is sent to the CO₂ absorber 13 through a lean solution supply line 53 by a lean solution pump 54, and is circulated and used as the CO₂ absorbent 12.

Accordingly, the CO₂ absorbent 12 forms a closed path through which the CO₂ absorbent 12 is circulated in the CO₂ absorber 13 and the absorbent regenerator 14, and is reused in the CO₂ absorption unit 13A of the CO₂ absorber 13. Meanwhile, the CO₂ absorbent 12 is supplied through a supply line (not illustrated) as necessary, and the CO₂ absorbent is regenerated by a reclaimer (not illustrated) as necessary.

Further, the CO₂-containing flue gas 11A, which is to be supplied to the CO₂ absorber 13, is cooled in a cooler 70, which is provided in the front stage of the CO₂ absorber 13, by cooling water 71. After that, the CO₂-containing flue gas 11A is introduced into the CO₂ absorber 13. Meanwhile, there is a case in which a part of the cooling water 71 is also supplied to the top portion 13C of the washing unit 13B as the wash water 20 of the CO₂ absorber 13 for the CO₂ absorbent and is used for the washing of the CO₂ absorbent 12 accompanied by the CO₂-removed flue gas 11B. Meanwhile, reference numeral 72 denotes a circulating pump, reference numeral 75 denotes a cooler, and reference numeral 74 denotes a circulation line.

As described above, the CO₂-removed flue gas 11B from which CO₂ has been removed comes into countercurrent contact with the wash water 20 in the washing unit 13B, so that the CO₂ absorbent 12 accompanied by the CO₂-removed flue gas 11B is absorbed and removed by the wash water 20. Accordingly, the diffusion of the CO₂ absorbent 12, which is circulated and used in the CO₂ absorber 13 and the absorbent regenerator 14, to the outside of the absorber 13 is prevented.

In this embodiment, a concentration unit 22 is provided to reuse the CO₂ absorbent 12, which is absorbed and removed by the wash water 20, and concentrates and uses the CO₂ absorbent 12.

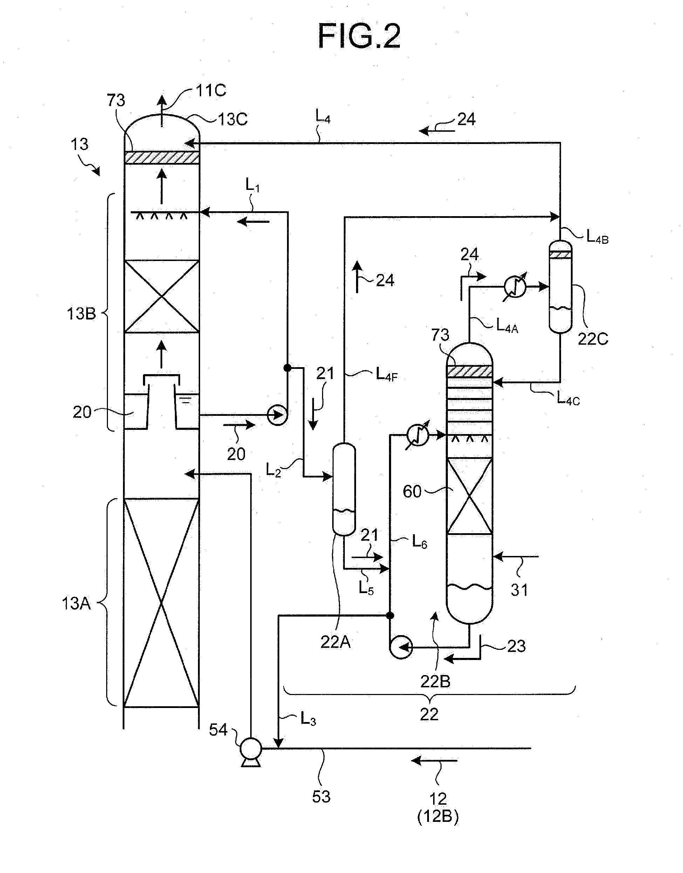

FIG. 2 is an enlarged view of a component portion including the absorber 13 and the concentration unit 22 of FIG. 1.

As illustrated in FIG. 2, the concentration unit 22 according to this embodiment includes a first gas-liquid separation unit 22A and a concentrator 22B.

The washing unit 13B extracts a part of the wash water 20, which contains CO₂ absorbent 12, as an extracted fluid 21 from the circulation line L₁, which circulates wash water 20, through the extraction line L₂ and introduces the extracted fluid 21 into the first gas-liquid separation unit 22A.

The first gas-liquid separation unit 22A separates a gas from liquid by diffusing the extracted fluid 21 and separates a gas component 24 from the extracted fluid 21. This gas component 24 is a highly volatile component such as ammonia contained in the CO₂ absorbent 12, for example, an ammonia gas, and is supplied to the gas inlet line L₄ through a supply line L_{4F}.

The extracted fluid 21 from which the gas component 24 has been separated by the first gas-liquid separation unit 22A joins a concentrated fluid circulation line L₆ of the concentrator 22B through a supply line L₅.

Air 31 is blown into the concentrator 22B from the bottom side of the concentrator so that a gas component 24 remaining in the circulating extracted fluid 21 is further extracted.

That is, in the concentrator 22B, the extracted fluid 21 joining the concentrated fluid 23 flows into the concentrator 22B from the top portion of the concentrator 22B, and a highly volatile gas component 24 comes into contact with the air 31 introduced from the bottom side and is diffused to the air while the concentrated fluid 23 having flowed into the concentrator flows down to the bottom side along the surface of a filler of, for example, a filling unit 60 or the like. The diffused gas component 24 is introduced to the downstream side of the washing unit 13B (the top portion of the CO₂ absorber 13) through the gas inlet line L₄, and is released to the outside from the top portion of the CO₂ absorber 13 together with the CO₂ absorbent-removed flue gas 11C from which the CO₂ absorbent 12 has been removed.

Further, a separation drum 22C is provided on a supply line L_{4A} through which the gas component 24 is led from the top portion of the concentrator 22B, and separates moisture from the gas component 24. Accordingly, the accompanying of moisture to the outside is prevented, so that the dispersion of moisture to the outside of the system is prevented. The gas component 24, which is separated by the separation drum 22C, is led to the gas inlet line L₄ through a supply line L_{4B}.

Furthermore, liquid, which is separated by the separation drum 22C, returns to the concentrator 22B through a supply line L_{4c}.

Meanwhile, if being introduced into the top portion of the absorber 13, the gas component 24 is released to the outside as it is. Accordingly, when gas regulations are strict, the gas component 24 may be introduced to the downstream side of the washing unit 13B (the top portion of the CO₂ absorber 13).

Moreover, the concentrated fluid 23, which is the CO₂ absorbent concentrated while circulating in the concentrator 22B, is introduced to the CO₂ absorption unit 13A provided on the upstream side of the washing unit 13B (at the bottom portion of the CO₂ absorber 13) through the concentrated fluid return line L₃, and is reused as the CO₂ absorbent 12.

When the concentrated fluid 23, which is the concentrated CO₂ absorbent, returns to the CO₂ absorption unit 13A in this embodiment, the concentrated fluid return line L₃ through which the concentrated fluid 23 returns joins a portion of the lean solution supply line 53 corresponding to the suction side of the lean solution pump 54 and the concentrated fluid 23 is introduced into the CO₂ absorption unit 13A together with the lean solution 12B and is reused as the CO₂ absorbent 12.

Meanwhile, the return line L₃ through which the concentrated fluid 23 returns may be separately introduced into the CO₂ absorption unit 13A.

According to this embodiment, it is possible to further reduce the concentrations of basic amine compounds of an absorbent that remain in a decarbonated flue gas and are to be released to the outside, and to reuse a recovered absorbent after concentrating the recovered absorbent.

### Second embodiment

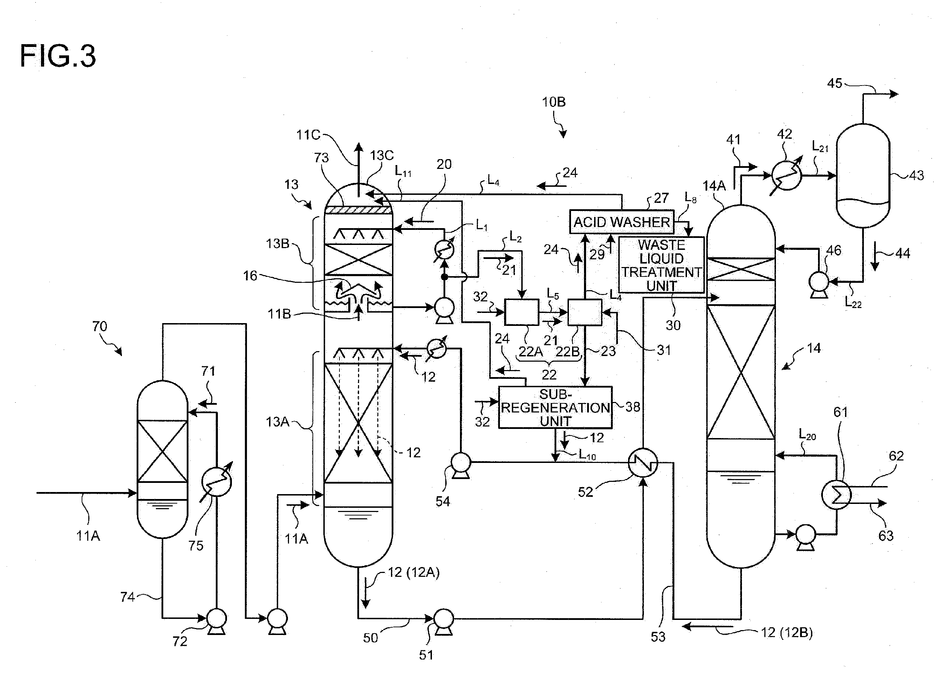

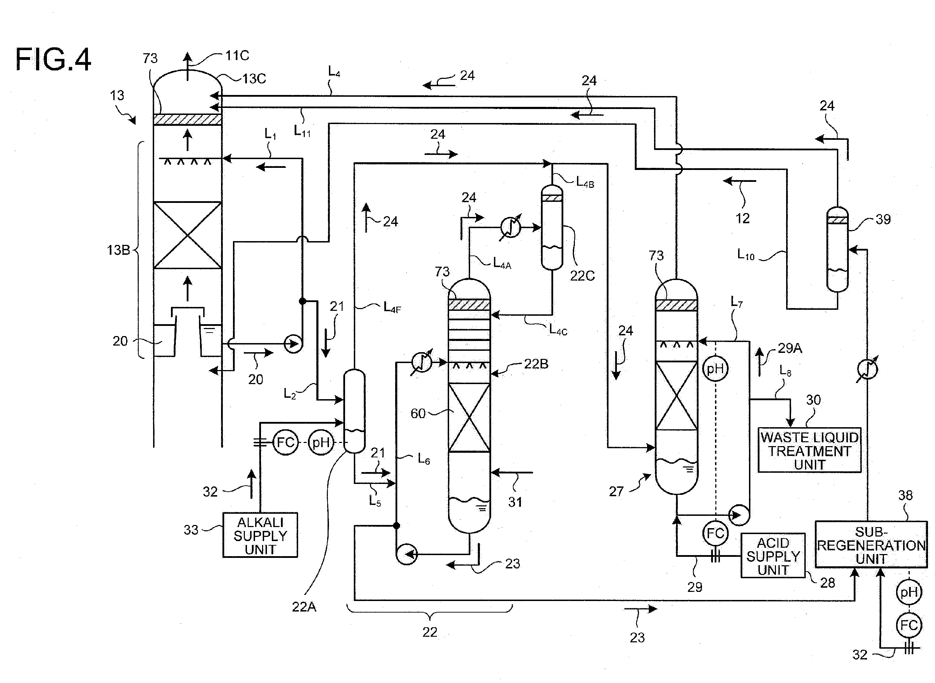

FIG. 3 is a schematic diagram of a CO₂ recovery device according to a second embodiment. FIG. 4 is an enlarged view of a component portion including an absorber and a concentration unit of FIG. 3. The same elements as the elements of the CO₂ recovery device 10A according to the first embodiment illustrated in FIG. 1 are denoted by the same reference numerals, and the repeated description thereof will not be made.

As illustrated in FIGS. 3 and 4, in a CO₂ recovery device 10B according to this embodiment, an alkali supply unit 33 that supplies an alkali (for example, sodium hydroxide or the like) 32 to the first gas-liquid separation unit 22A used in the first embodiment is provided and the first gas-liquid separation unit 22A adjusts a pH of the extracted fluid 21.

For example, sodium hydroxide can be used as the alkali 32 to be supplied here, but the invention is not limited thereto.

Meanwhile, examples of the alkali 32 may include sodium carbonate, potassium hydroxide, potassium carbonate, calcium hydroxide, and calcium carbonate other than sodium hydroxide.

Further, when the alkali 32 is added to the first gas-liquid separation unit 22A, volatile basic components contained in the gas component 24 are separated. Accordingly, an acid washer 27, which is a volatile basic component recovery unit recovering the volatile basic components by acid treatment, is provided to recover and remove the volatile basic components contained in the gas component 24 separated by the first gas-liquid separation unit 22A and the concentrator 22B.

In the acid washer 27, an acid 29 is added to a supply line L₇ from an acid supply unit 28 and sulfate is recovered from an acid treatment fluid 29A and is treated in a waste liquid treatment unit 30 through a supply line L₈.

For example, a sulfuric acid can be used as the acid 29 to be added here, but the invention is not limited thereto.

Meanwhile, examples of the acid 29 may include a hydrochloric acid, a phosphoric acid, a boric acid, a carbonic acid, an oxalic acid other than a sulfuric acid.

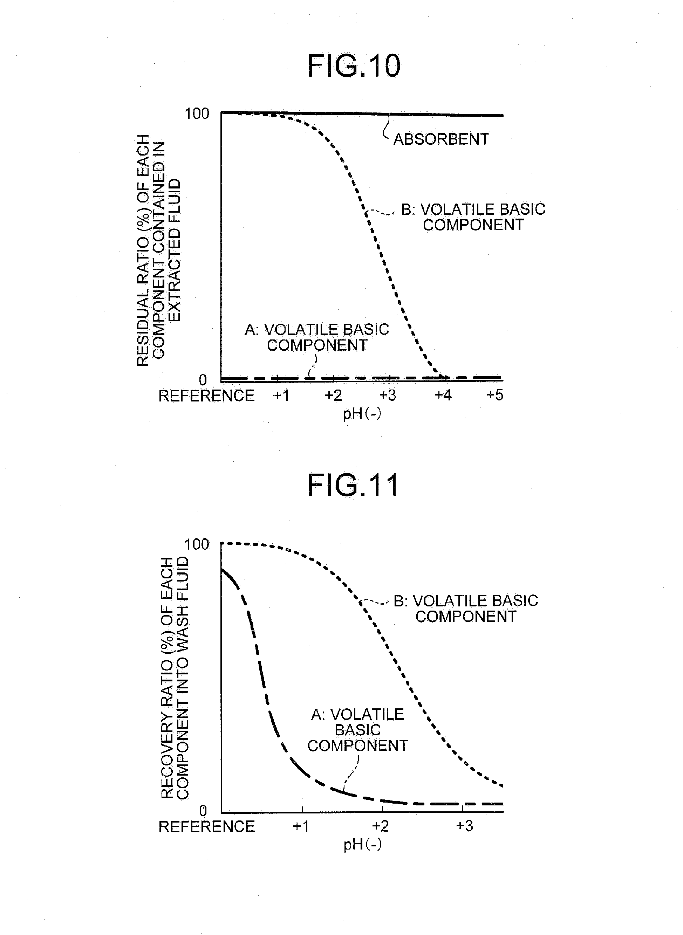

FIG. 10 is a diagram illustrating a relation between a pH and the residual ratio of each component contained in an extracted fluid.

As illustrated in FIG. 10, the CO₂ absorbent 12, the wash water 20, and volatile basic components are contained in the extracted fluid 21. Among the volatile basic components, most of a volatile basic component (gas component) A having a low boiling point such as ammonia is gasified by the diffusion function of the first gas-liquid separation unit 22A. However, the behavior of a volatile basic component (gas component) B of which the boiling point is higher than the boiling point of ammonia is different from the behavior of the gas component A.

That is, when a predetermined pH corresponding to the kind of the absorbent is defined as a "reference pH", the gas component B is changed into a gas from liquid as a pH becomes higher than the reference pH toward a range of +1 to +4.

Accordingly, when a pH is a reference value (0) in the first gas-liquid separation unit 22A of the concentration unit 22, only the volatile basic component (gas component) A is contained in the gas component 24 as illustrated in FIG. 10.

In contrast, when the alkali 32 is added to the first gas-liquid separation unit 22A of the concentration unit 22 so that a pH becomes higher than a reference value toward a range of +1 to +4, not only the volatile basic component (gas component) A but also the volatile basic component (gas component) B is contained in the gas component 24 as illustrated in FIG. 10. Accordingly, it is possible to separate most of the volatile basic components (gas components) A and B from the concentrated fluid 23.

The separated volatile basic component (gas component) B is contained in the gas component 24 as it is and is introduced into the absorber 13 through the gas inlet line L₄. Accordingly, in this embodiment, the acid washer 27 is provided and sulfate is recovered by acid treatment for adding the acid 29 so that accompanying to the gas component 24 is prevented.

FIG. 11 is a diagram illustrating a relation between a pH and the recovery ratio of each volatile basic component contained in acid treatment fluid. When a predetermined acid is added so that a pH is a reference value (0) as illustrated in FIG. 11, most of the volatile basic components (gas components) A and B are present in the acid treatment fluid as illustrated in FIG. 11.

In contrast, when the amount of the acid 29 to be added is reduced in the acid washer 27 so that a pH becomes higher than a reference value toward a range of +1 to +3 (alkali side), the volatile basic component (gas component) B remains in the acid treatment fluid and the volatile basic component (gas component) A is separated as a gas as illustrated in FIG. 11.

Since the volatile basic component (gas component) A is ammonia or the like, the volatile basic component (gas component) A is introduced into the absorber 13 through the gas inlet line L₄ and is discharged to the outside when there is no ammonia regulation.

In contrast, when a flue gas regulation is strict and the discharge of ammonia is also limited, the acid 29 is added so that the volatile basic component of which the pH is equal to or lower than a reference on the acid side is not discharged to the gas component 24.

It is possible to separate and recover the volatile basic components by adjusting a pH at the time of acid treatment as described above.

Further, since an alkali is added to the first gas-liquid separation unit 22A, it is not possible to return the concentrated fluid 23 to the CO₂ absorbent 12 as it is as in the first embodiment. The reason for this is as follows: since a pH becomes high by the addition of an alkali so as to be on an alkali side, the added alkali is accumulated in absorbent 12 and causes the fluctuation of a Ph balance when the concentrated fluid returns to the absorber 13 as it is.

Accordingly, in this embodiment, a sub-regeneration unit 38 is provided, an alkali 32 is further added to the concentrated fluid 23 so that a pH of the concentrated fluid 23 is on a strong alkali side, and heat exchange is indirectly performed using saturated steam (not illustrated) in this strong alkali condition to regenerate the concentrated fluid 23, so that the CO₂ absorbent 12 is gasified. The gasified CO₂ absorbent is separated into the gas component 24, which contains steam, and the CO₂ absorbent 12 by a second gas-liquid separation unit 39. The separated CO₂ absorbent 12 returns to the upstream side of the washing unit 13B (the CO₂ absorption unit 13A) through a supply line L₁₀. Meanwhile, the gas component 24 such as steam returns to the top portion 13C through a supply line L₁₁.

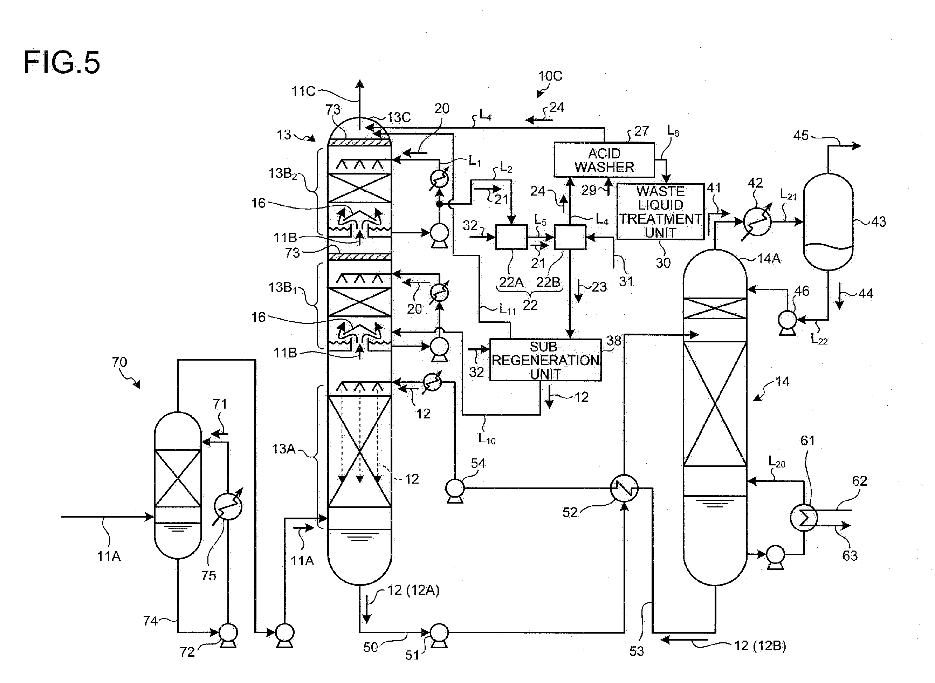

FIG. 5 is a schematic diagram of another CO₂ recovery device according to the second embodiment.

In the CO₂ recovery device 10B illustrated in FIG. 3, the washing unit 13B of the absorber 13 has included one stage. However, in a CO₂ recovery device 10C illustrated in FIG. 5, a washing unit includes two stages, that is, a washing unit (lower stage) 13B₁ and a washing unit (upper stage) 13B₂.

In the invention, the washing unit is not limited to two stages and may include three or more stages.

The CO₂ absorbent 12 in the case of this embodiment returns to a washing unit 13B₁, which is provided on the lower stage, through the supply line L₁₀.

### Third embodiment

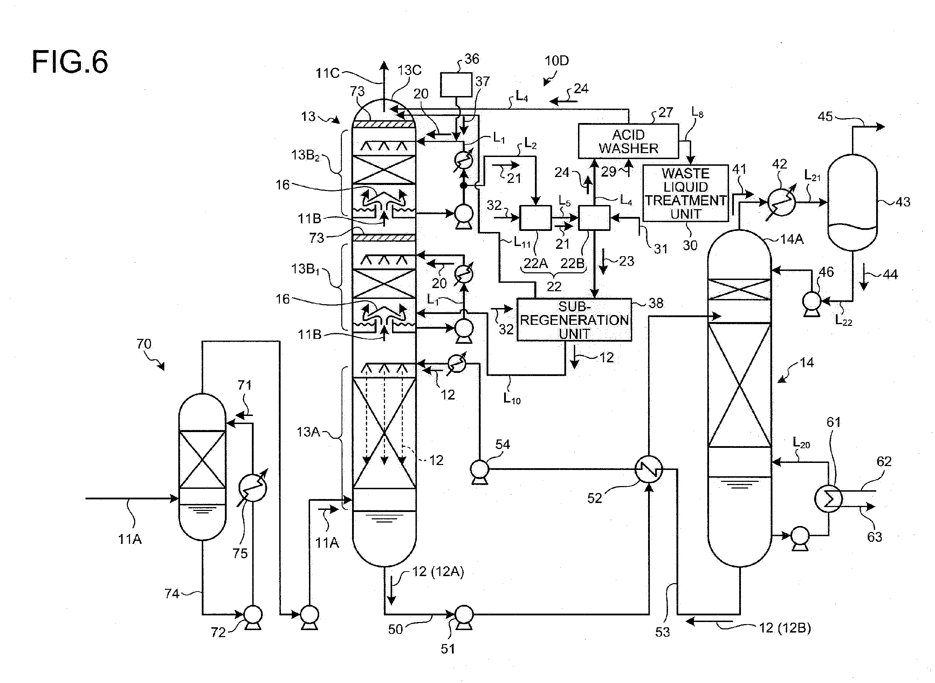

FIG. 6 is a schematic diagram of a CO₂ recovery device according to a third embodiment. The same elements as the elements of the CO₂ recovery devices 10A, 10B, and 10C according to the first embodiment illustrated in FIGS. 1, 3, and 5 are denoted by the same reference numerals, and the repeated description thereof will not be made.

In a CO₂ recovery device 10D according to this embodiment, an acid fluid 37 is supplied to a circulation line L₁ of a washing unit (upper stage) 13B₂ from an acid fluid supply unit 36, so that the wash water 20 becomes acidic. Since the wash water 20 becomes acidic, the degree of absorption of the CO₂ absorbent in the washing unit is improved.

Further, since the extracted fluid 21 also has become acidic, the alkali 32 is supplied to the extracted fluid 21 so that the extracted fluid 21 is isolated to be free from ions. As a result, the volatile basic component is easily gasified.

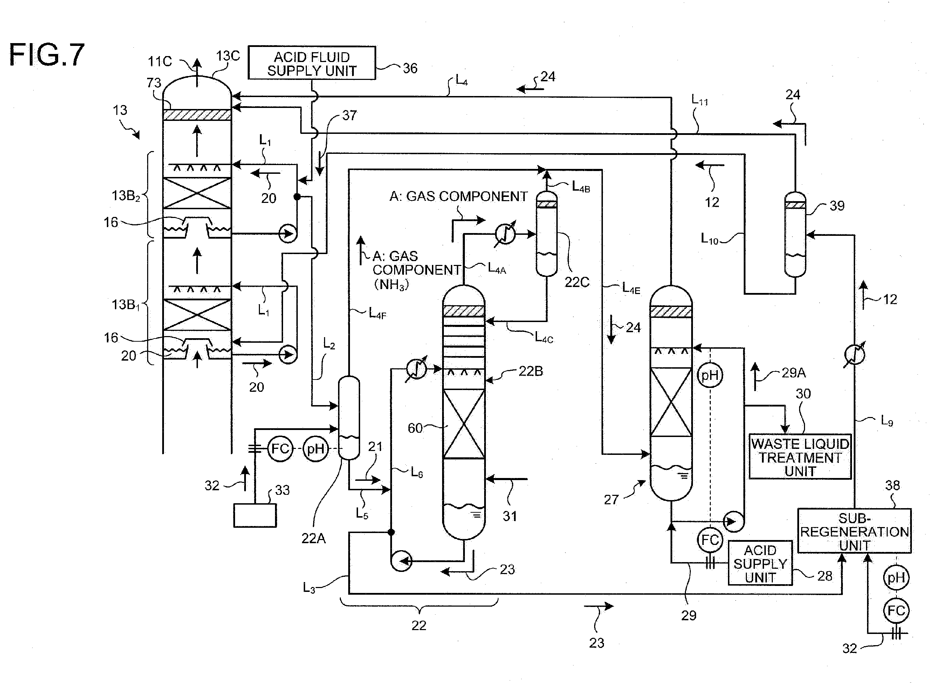

As illustrated in FIG. 7, an absorbent (gas state) is separated, and an accompanying gas component 24 is separated by a second gas-liquid separation unit 39, returns to the absorber 13 as a regenerated absorbent, and is supplied for reuse. The gas component 24 is supplied to an acid washing line through a supply line L_{4E} with which a supply line L_{4F} through which the gas component 24 separated by the first gas-liquid separation unit 22A is supplied and a supply line L_{4B} for a gas separated by the separation drum 22C are united. The gasified gas of the CO₂ absorbent 12 supplied from the sub-regeneration unit 38 is sent to the second gas-liquid separation unit 39 through a supply line L₉.

Meanwhile, the gas component 24 returns to a top portion of the washing unit 13B₂ through a supply line L₄, and the regenerated CO₂ absorbent 12 returns to a first washing unit (lower stage) 13B₁ through a supply line L₁₀.

### Fourth embodiment

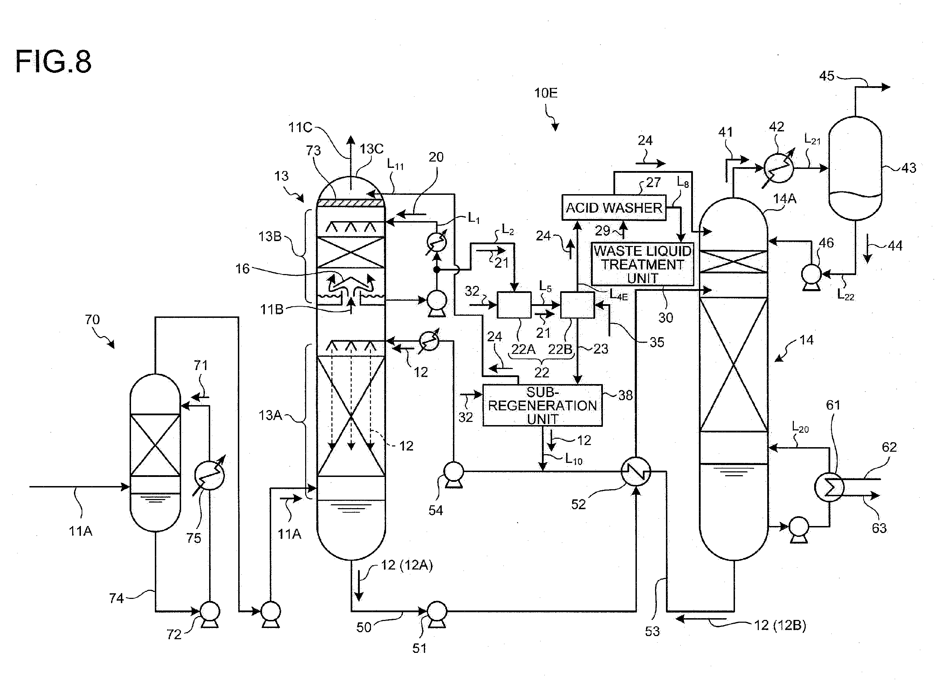

FIG. 8 is a schematic diagram of a CO₂ recovery device according to a fourth embodiment. The same elements as the elements of the CO₂ recovery devices 10A, 10B, and 10C according to the first embodiment illustrated in FIGS. 1, 3, and 5 are denoted by the same reference numerals, and the repeated description thereof will not be made.

In a CO₂ recovery device 10E according to this embodiment, steam 35 is supplied to the concentrator 22B of the second embodiment instead of the air 31 so that the ejection of the gas component 24 is performed by the steam 35.

When the steam 35 is used, a return destination of the gas component 24 is not the absorber 13 unlike in the second embodiment and the gas component 24 is introduced into a top portion 14A of the regenerator 14.

The reason for this is that the air 31 is mixed to recovered CO₂ if the regenerator 14 is used as the return destination of the gas component 24 when the air 31 is used as in the second embodiment.

Since the mixing of the air 31 is the mixing of an impurity in regard to the recovered CO₂, the purity of the recovered CO₂ is lowered.

In contrast, when the steam 35 is used instead of the air 31, this purity is not lowered. Accordingly, the steam 35 may be introduced into the regenerator 14.

As described above, according to the invention, it is possible to further reduce the concentrations of the basic amine compounds that remain in a decarbonated flue gas and are to be released, and to effectively use a concentrated absorbent again.

### Reference Signs List

- 10A TO 10E: CO₂ RECOVERY DEVICE
- 11A: CO₂-CONTAINING FLUE GAS
- 12: CO₂ ABSORBENT
- 12A: RICH SOLUTION
- 12B: LEAN SOLUTION
- 13: CO₂ ABSORBER (ABSORBER)
- 14: ABSORBENT REGENERATOR (REGENERATOR)
- 20: WASH WATER
- 21: EXTRACTED FLUID
- 22: CONCENTRATION UNIT
- 22A: FIRST GAS-LIQUID SEPARATION UNIT
- 22B: CONCENTRATOR
- 23: CONCENTRATED FLUID
- 24: GAS COMPONENT

## Claims

1. A CO₂ recovery device comprising
a CO₂ absorber for bringing a CO₂-containing flue gas, which contains CO₂, into contact with a CO₂ absorbent, so as to remove CO₂ and
an absorbent regenerator for separating CO₂ from the CO₂ absorbent having absorbed CO₂, so as to regenerate the CO₂ absorbent,
the CO₂ recovery device reusing a lean solution, from which CO₂ has been removed in the absorbent regenerator, in the CO₂ absorber,
wherein the CO₂ absorber includes:
a CO₂ absorption unit for absorbing CO₂ contained in the CO₂-containing flue gas by the CO₂ absorbent;
a washing unit provided downstream of the CO₂ absorption unit on a gas flow, for cooling a CO₂-removed flue gas by wash water and recovering the accompanying CO₂ absorbent;
a circulation line for supplying the wash water containing the CO₂ absorbent, which is recovered by the washing unit, from a top portion of the washing unit, and for circulating and washing the wash water;
an extraction line for extracting a part of the wash water, which contains the CO₂ absorbent, as an extracted fluid from the circulation line;
a first gas-liquid separation unit for separating a gas component from the extracted fluid; and
a concentration unit for concentrating the CO₂ absorbent contained in the extracted fluid and separating a gas component.

2. The CO₂ recovery device according to claim 1, further comprising:
an alkali supply unit for adjusting a pH of the extracted fluid by adding an alkali to the first gas-liquid separation unit;
an acid washer for recovering a volatile basic component from the gas component, which is separated by the concentration unit, by an acid; and
a sub-regeneration unit for regenerating the CO₂ absorbent from the concentrated fluid concentrated by the concentration unit.

3. The CO₂ recovery device according to claim 1 or 2,
wherein the washing unit includes a plurality of stages.

4. The CO₂ recovery device according to claim 1 or 2,
wherein the washing unit includes a plurality of stages, the wash water is circulated in each stage, and an acid is added to the wash water circulated in the uppermost stage of the washing unit.

5. The CO₂ recovery device according to any one of claims 1 to 4,
wherein the concentration of the concentration unit is performed by air or steam.

6. A CO₂ recovery method by using a CO₂ absorber for bringing a CO₂-containing flue gas, which contains CO₂, into contact with a CO₂ absorbent so as to remove CO₂ and an absorbent regenerator for separating CO₂ from the CO₂ absorbent having absorbed CO₂ so as to regenerate the CO₂ absorbent and by reusing the lean solution, from which CO₂ has been removed in the absorbent regenerator, in the CO₂ absorber,
the CO₂ recovery method comprising:
cooling a CO₂-removed flue gas by wash water downstream the CO₂ absorber and extracting a part of a washing unit, which recovers the accompanying CO₂ absorbent, as an extracted fluid; and
separating a gas component by separating the gas component from the extracted fluid and then concentrating the CO₂ absorbent contained in the extracted fluid.

7. The CO₂ recovery method according to claim 6,
wherein an alkali is added to adjust a pH of the extracted fluid when the gas component is separated from the extracted fluid, and a volatile basic component contained in the gas component is recovered by an acid, and
the CO₂ absorbent is regenerated from the concentrated fluid.

8. The CO₂ recovery method according to claim 6 or 7, wherein concentration is performed by air or steam.
